# EUROPEAN PATENT APPLICATION

(11) **EP 2 068 018 A1**
(43) Date of publication of application: **10.06.2009**
(21) Application number: 07122353.1
(22) Date of filing: 05.12.2007
(51) Int. Cl.: F16C 33/38, F16C 33/41, F16C 33/66

(54) **Ball bearing cage**

(71) Applicant: Aktiebolaget SKF, 415 50 Göteborg (SE)
(72) Inventor: Finetti, William, 10040 La Loggia (Torino) (IT); Restivo, Riccardo, 10144 Torino (IT); Gallucci, Francesco, 10040 Volvera (Torino) (IT); Lazzari, Tommaso, 10121 Torino (IT)
(74) Representative: Fioravanti, Corrado

(57) **Abstract**

A ball bearing cage (10) has a circular base rib (11) and fingers (12) extending from at least one axial side of the rib (11). Spherical pockets (13) for retaining bearing balls (20) are defined by first and second concave facing surfaces (15, 16) of two consecutive fingers (12) and a third concave surface formed on a side of the rib between the consecutive fingers. Each pocket (13) forms at least one further recessed surface (17, 18, 19) which is a concave surface acting as a receptacle for retaining an amount of lubricant.

## Description

The present invention refers to a cage for bearing balls. This invention is applicable, particularly but not exclusively, to bearing units having a dual row of balls.

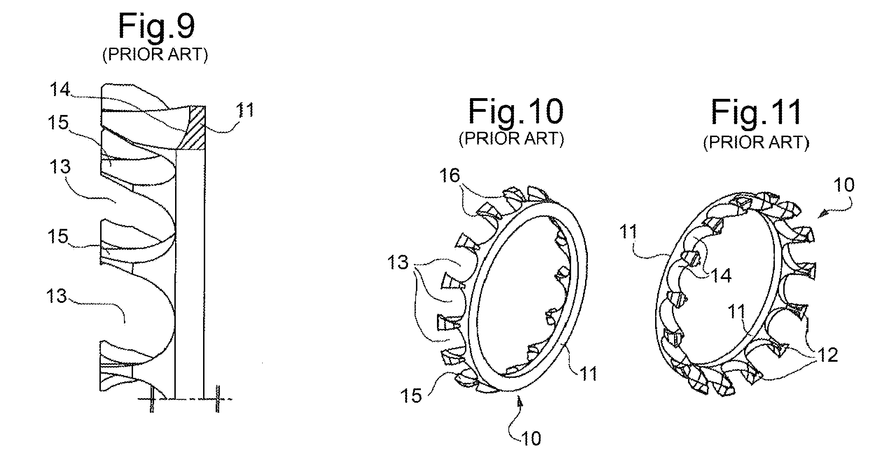

A conventional bearing ball retaining cage is shown in figures 9 to 11. The cage 10 is formed by a circular base rib 11 and a plurality of circumferentially equally spaced fingers 12 extending from one side of the rib 11. The base rib 11 and the fingers 12 have spherical concave surfaces 14, 15, 16, together defining a plurality of spherical pockets or cavities 13 for retaining respective bearing balls (not shown) circumferentially equally spaced along the raceways of a bearing. The inner parts of the bearing are conventionally filled with lubricant grease once the bearing is assembled, that is after the bearing balls are snap-fitted in the pockets. In the case of a radial bearing, the grease is introduced axially from the outside. When it is introduced from the side opposite the base rib of the cage, it is easier to place some grease directly onto the balls.

As known to those skilled in the art, correct lubrication of the inner parts of the bearing involved with rolling contact is of primary importance. Excessive friction occurring between the bearing balls and the pockets of the cage adversely affects efficiency and, in the long term, will cause the pocket surfaces to melt.

EP 1 355 072 B1 discloses a cage with lubricating channels crossing the bottom surfaces of ball retaining pockets for delivering the lubricant from the inner to the outer perimeter thereof or vice versa.

A main object of this invention is to provide a cage which can improve and permanently guarantee appropriate retention and diffusion of the lubricant grease for the whole lifetime of a ball bearing unit. A specific object of the invention is to combine the required excellent result in terms of lubrication with an ability to optimize the surfaces of the pockets, balancing the need to have a reduced clearance while providing an area between the balls and the cage pockets that is large enough in order to smoothly retain the bearing balls, while reducing vibration and impacts of the balls against the cage.

The above and further objects and advantages are achieved, according to the invention, by a bearing ball cage as defined in the appended claims. According to another aspect of the invention, a method of assembling a ball bearing unit is proposed as defined in claim 14.

A few preferred, but not limiting embodiments of the invention will now be described, reference being made to the accompanying drawings, in which:
Figure 1 is a perspective view of a first embodiment of a cage according to the invention;
Figure 2 is an enlarged view of a detail of figure 1, showing a pocket for a bearing ball;
Figure 3 is a cross sectional view taken through the pocket of figure 2 showing also a bearing ball;
Figure 4 is a cross sectional view taken through the pocket of a second embodiment of a cage in accordance with the invention;
Figure 5 is a partially sectioned perspective view of the pocket of figure 4;
Figure 6 is a view from above of the pocket of figure 4;
Figure 7 is a cross sectional view along lines VII-VII in figure 5;
Figure 8 is a front view of a third embodiment of a cage according to the invention;
Figure 9 is a partial axial cross-sectional view of a conventional ball bearing cage;
Figures 10 and 11 are perspective views showing the two opposite sides of the cage of figure 9.

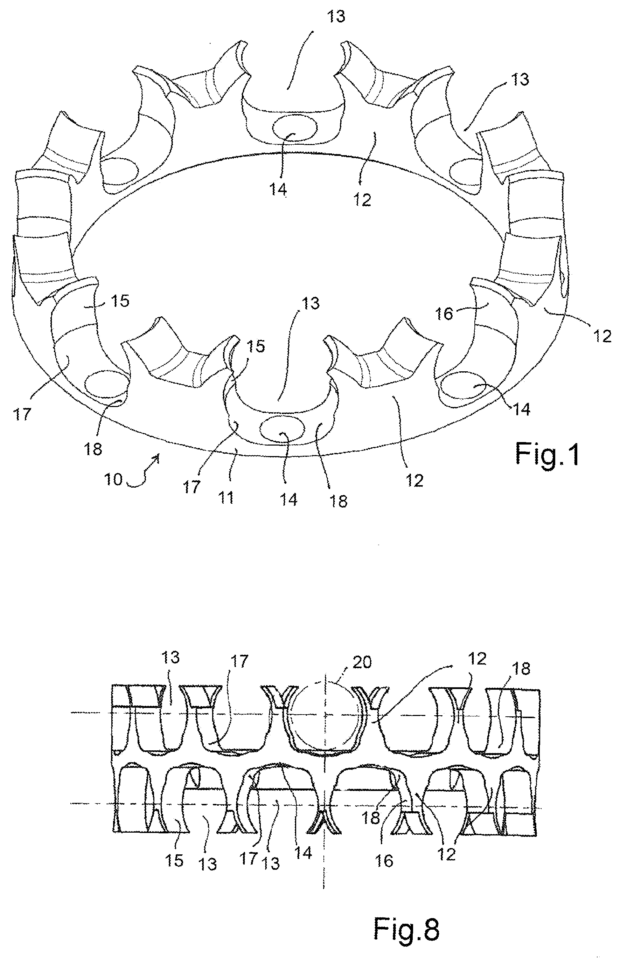

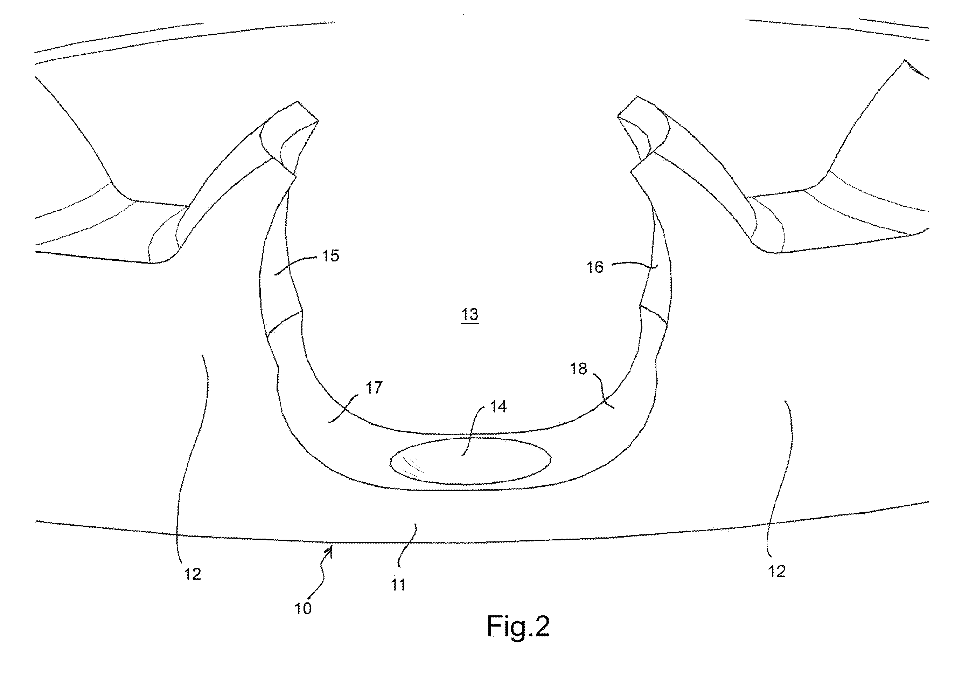

Referring now to figures 1 to 3, a ball bearing cage 10 is formed by a circular base rib 11 and a plurality of circumferentially equally spaced fingers 12 extending substantially axially from one side of the rib 11. Each finger 12 has two circumferentially opposite concave sides which define together with the base rib 11 a plurality of pockets or cavities 13 for retaining bearing balls circumferentially spaced from one another along the raceways of a ball bearing unit. Each pocket 13 is defined by the facing sides of two consecutive fingers and a concave surface of the rib between two consecutive fingers. Preferably, the cage is a so-called self-retaining cage, wherein the pockets have such an extent as to be able to retain the balls also during the manipulating steps while assembling the bearing.

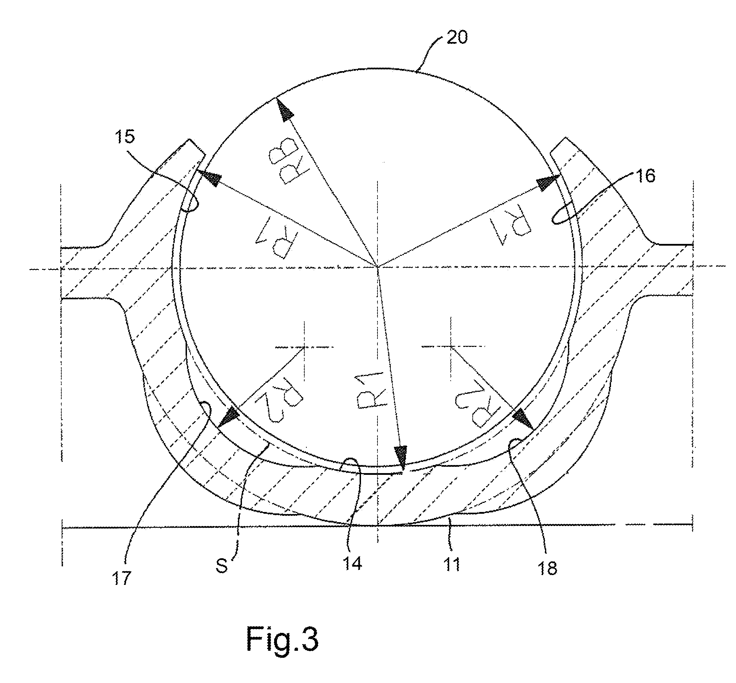

According to the invention, some parts 14, 15, 16 of each pocket 13 form portions of a spherical surface S indicated by the dotted line in Figure 3 for retaining, with a small clearance, a respective ball 20, whereas other parts of the pocket form one or more concave surfaces 17, 18 which are further recessed and extend from the inner perimeter to the outer perimeter of the cage. These more recessed surfaces act as receptacles for containing the lubricant and, as the cage rotates, collecting and supplying lubricant to the rotating ball whilst retaining a reserve thereof.

In each pocket, the further recessed surfaces 17, 18 are preferably located at the root or proximal portion of either side of each finger 12, at the junction between the finger and the base rib 11. This arrangement ensures a good retention and circulation of lubricant grease in either direction of rotation of the bearing.

A third concave portion 14 lying on the ideal spherical surface S and having a circular or cap-like shape, is located at the bottom of the pocket on the base rib 11. As indicated in Figure 3, the third concave portion 14 has a same radius R1 as the first and second spherical facing surfaces 15, 16, whereas the more recessed surfaces 17, 18 are bowl-shaped and have a smaller radius R2, for example about one half of R1. The three spherical portions 14, 15, 16 altogether provide a triple ball retaining surface. The third spherical portion 14 retains the ball in an axial direction towards the rib 11, whereas the two finger surfaces 15, 16 mainly contain the ball in the circumferential and radial directions and in the other axial direction, away from rib 11.

On the one hand, the further recessed surfaces 17, 18 retain a permanent reserve of lubricant grease while providing the diffusion of a lubricant film over the bearing balls, and therefore reduce friction and wear. On the other hand, the arrangement of the three spread apart surfaces 14, 15, 16 which a ball may come in contact with is on the whole large enough to embrace the ball and establish a most favourable floating contact while allowing to reduce clearance, contact pressure, vibration and noise.

As best seen in figure 3, preferably the thickness of the walls of cage is substantially constant also in the zones of the pockets due to corresponding bulges formed on the outer side of the cage walls opposite the recessed surfaces 17, 18. Due to this arrangement, the rigidity of the cage is not jeopardized by the presence of the recessed surfaces.

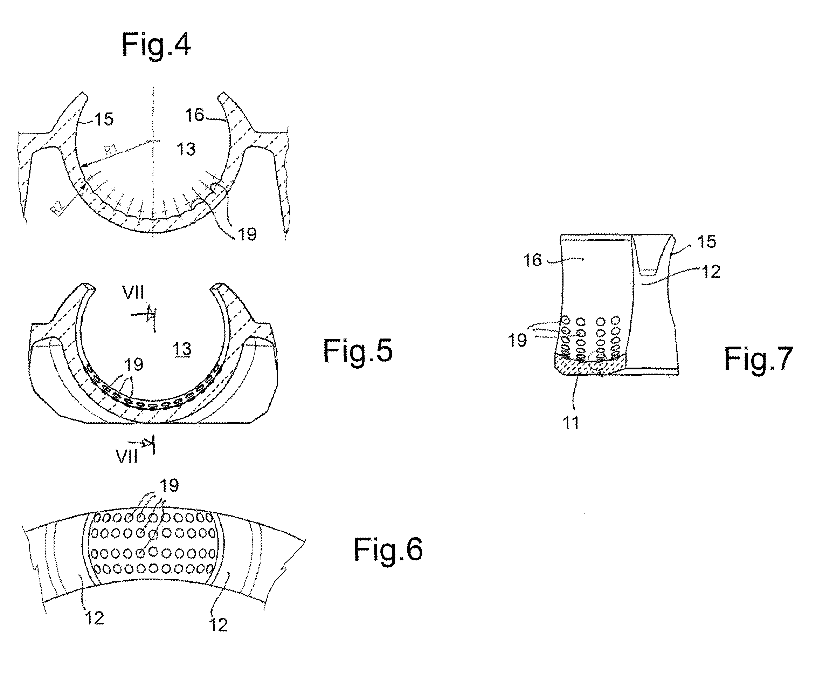

According to a second embodiment of the invention, as shown in figures 4 to 7, a multitude of further recessed concave surfaces 19 are distributed across each pocket 13. These further recessed concave surfaces 19 are advantageously distributed from the inner to the outer perimeter of the cage. The surfaces 19 are bowl-shaped and act as receptacles for retaining small amounts of lubricant and, as the cage rotates, collecting and supplying lubricant to the rotating ball whilst retaining a reserve thereof. The concave surfaces 19 are much smaller than those designated at 17, 18 in the embodiment of figures 1 to 3, and have a radius about 5 to 15 times smaller than the radius of the spherical surface defined overall by the pocket 13.

Preferably, the recessed surfaces 19 are distributed at least at the root or proximal portion of either side of each finger 12, at the junction between the fingers and the base rib 11. In the preferred embodiment shown in figures 4 to 7, concave surfaces 19 are also situated on the bottom part of the pocket, on the base rib 11.

Still in accordance with the invention, the grease is placed onto the cage, and particularly in the recesses 17, 18, 19, before the balls are fitted in the pockets. This ensures that a significant quantity of lubricant will be permanently available onto the cage, at or close to the contact areas between the balls and the cage.

Those skilled in the art will readily recognize that the invention is equally applicable to ball bearing units of different designs. For example, the cage of this invention may be advantageously applied also to bearings having a dual row of balls. To this end, two cages such as the one of Figure 1 may be located with their ribs side to side or, as shown in the variant embodiment of Figure 8, a single cage may provide a dual set of pockets on its axially opposite sides for two respective rows of balls (not shown). With the purpose of reducing the axial bulk of the cage, the pockets of one row are angularly offset with respect to the pockets of the other row.

## Claims

1. A ball bearing cage (10), with:
- a circular base rib (11),
- a plurality of circumferentially equally spaced fingers (12) extending from at least one axial side of the rib (11),
- a plurality of pockets (13) for retaining respective bearing balls (20), each pocket (13) being defined by first and second concave facing surfaces (15, 16) of two consecutive fingers (12) and a third concave surface formed on said axial side of the rib between the said consecutive fingers, the first, second and third surfaces each are part of a spherical surface (S),
wherein each pocket (13) forms at least one further recessed surface (17, 18, 19),
and wherein the further recessed surface is a concave surface acting as a receptacle for retaining an amount of lubricant.

2. A cage according to claim 1, wherein the further recessed concave surface (17, 18) extends from the inner perimeter to the outer perimeter of the cage.

3. A cage according to claim 2, wherein each pocket (13) forms two of said further recessed surfaces (17, 18), each extending from the inner perimeter to the outer perimeter of the cage, said further recessed surfaces being concave surfaces acting as receptacles, each for retaining an amount of lubricant.

4. A cage according to claim 2, wherein the further recessed surfaces (17, 18) are located at the root or proximal portion of either side of each finger (12), at the junction between the finger and the base rib (11).

5. A cage according to claim 2, wherein said further recessed surface/s (17, 18) have a radius (R2) being about one-half of the radius (R1) of the spherical surface (S) defined by said first, second and third surfaces (14-16).

6. A cage according to any one of claims 2 to 5, the cage having walls of substantially constant thickness.

7. A cage according to claim 1, wherein each pocket (13) forms a multitude of said further recessed concave surfaces (19) distributed across each pocket (13) from the inner to the outer perimeter of the cage.

8. A cage according to claim 7, wherein each concave surface (19) has a radius about 5 to 15 times smaller than the radius of the spherical surface (S) defined by said first, second and third surfaces (14-16).

9. A cage according to claim 7 or 8, wherein the further recessed surfaces (19) are distributed at least at the root or proximal portion of either side of each finger (12), at the junction between the fingers and the base rib (11).

10. A cage according to claim 9, wherein the further recessed surfaces (19) are also situated on the bottom part of the pockets, on the base rib (11).

11. A cage according to any one of the preceding claims, the cage having circumferentially equally spaced fingers (12) extending from both axial sides of the rib (11) and a dual set of said pockets (13) on its axially opposite sides for two respective rows of balls.

12. A cage according to claim 11, wherein the pockets (13) of one row are angularly offset with respect to the pockets (13) of the opposite row.

13. A cage according to any one of the preceding claims,
wherein said further recessed surface/s (17, 18, 19) is/are bowl-shaped.

14. A method of assembling a ball bearing unit, the method including the steps of:
- providing a ball bearing cage (10) according to any one of claims 1 to 13,
- placing lubricant grease in each of the pockets (13), and
- fitting a bearing ball (20) in each pocket (13),
whereby said further recessed surfaces (17, 18, 19) are substantially filled with lubricant grease.
